# FASCICULE DE BREVET EUROPEEN

(11) **EP 0 239 433 B1**
(45) Date de publication et mention de la délivrance du brevet: **18.05.1994**
(21) Numéro de dépôt: 87400362.7
(22) Date de dépôt: 19.02.1987
(51) Int. Cl.: G02F 1/137, G02F 1/133

(54) **Cellule à cristal liquide utilisant l'effet de biréfringence contrôlée électriquement et procédé de fabrication de la cellule**
Flüssigkristallzelle mit elektrisch gesteuerter Doppelbrechung und Herstellungsverfahren für die Zelle
Liquid-crystal cell with electrically controlled birefringence and method for making the same

(30) Priorité: 28.02.1986 FR 8602855
(43) Date de publication de la demande: 30.09.1987
(73) Titulaire: COMMISSARIAT A L'ENERGIE ATOMIQUE, 75015 Paris Cédex 15 (FR)
(72) Inventeur: Clerc, Jean-Frédéric, F-38120 Saint-Egreve (FR); Deutsch, Jean-Claude, F-38000 Grenoble (FR); Vaudaine, Pierre, F-38100 Grenoble (FR); Vey, Sylvie, F-38100 Grenoble (FR)
(74) Mandataire: Dubois-Chabert, Guy

(56) Documents cités:
- EP-A- 0 162 775
- WO-A-82/03467
- GB-A- 2 065 321
- ELECTRONICS LETTERS, vol. 10, no. 7, 4 avril 1974, pages 90-91, New York, US; I.A. SHANKS: "Electro-optical colour effects by twisted nematic liquid crystal"

## Description

La présente invention concerne une cellule à cristal liquide utilisant l'effet de biréfringence contrôlée électriquement et un procédé de fabrication de la cellule.

Elle s'applique notamment à la réalisation de dispositifs d'affichage de données tels que des écrans matriciels et en particulier à la réalisation d'écrans complexes destinés à l'affichage en couleur.

On connaît déjà des cellules à cristal liquide utilisant l'effet de biréfringence contrôlée électriquement. Cet effet a déjà permis de réaliser des écrans matriciels à cristaux liquides et a déjà fait l'objet de publications telles que l'article de J.ROBERT intitulé "T.V. image with L.C.D.", publié dans la revue IEEE Transactions on Electron Devices, vol.Ed 26, n°8. Août 1979, et l'article de J.F. Clerc intitulé "Electro-optical limits of the E.C.B. effect in nematic liquid crystals", publié dans la revue Display's, octobre 1981.

Une cellule à cristal liquide utilisant l'effet de biréfringence contrôlée électriquement comprend par exemple, selon l'état de la technique, une couche de cristal liquide nématique comprise entre deux plaques de verre munies d'électrodes transparentes. Deux moyens de polarisation, par exemple deux polariseurs rectilignes croisés, sont respectivement disposés de part et d'autre de l'ensemble ainsi obtenu. Lorsqu'aucune tension électrique n'est appliquée entre les électrodes, les molécules de la couche de cristal liquide sont sensiblement parallèles à une direction appelée "direction d'homéotropie" et perpendiculaire aux plaques de verre, et une lumière incidente ne peut traverser la cellule. Lorsqu'une tension électrique appropriée est appliquée entre les électrodes, les molécules de la couche de cristal liquide s'orientent sensiblement suivant une direction faisant avec la direction d'homéotropie un angle qui est fonction de la tension appliquée ou tension d'excitation. Une lumière incidente peut alors traverser au moins en partie la cellule. Il est donc possible de commander électriquement l'intensité lumineuse transmise à travers cette cellule, cette intensité étant fonction de ladite tension.

Les cellules à cristal liquide utilisant l'effet de biréfringence contrôlée électriquement présentent l'inconvénient suivant : le contraste de ces cellules, observées obliquement, se dégrade, et ce d'autant plus que l'angle d'observation est important, ce contraste pouvant même s'inverser pour certains angles d'observation.

Dans la demande de brevet français n°8407767 du 18 mai 1984 et dans EP-A-0 162 775 est proposée une cellule à cristal liquide utilisant l'effet de biréfringence contrôlée électriquement et visant à remédier à cet inconvénient.

Cependant, la cellule proposée présente elle-même des inconvénients : elle nécessite une épaisseur déterminée de la couche de cristal liquide, permet une compensation efficace de la biréfringence de cette couche seulement dans deux plans d'incidence de la lumière et au voisinage de ces plans, et présente des défauts de chromaticité, l'extinction étant moins bonne pour certaines longueurs d'onde lumineuses que pour d'autres.

La présente invention a pour but de remédier aux inconvénients précédents.

Elle a pour objet une cellule à cristal liquide utilisant l'effet de biréfringence contrôlée électriquement avec les caractéristiques techniques de la revendication 1.

L'utilisation de cette couche d'un milieu de compensation de la biréfringence (de la couche de cristal liquide nématique dans sa structure homéotrope, pour une observation oblique de la cellule) permet de conserver un contraste élevé lors d'observations de la cellule sous des angles importants pouvant aller jusqu'à 70 degrés. De plus la cellule objet de l'invention ne présente pas les défauts de chromaticité mentionnés plus haut, permet une compensation efficace de la biréfringence dans tout plan d'incidence de la lumière et peut être réalisée avec toute épaisseur de cristal liquide, y compris des épaisseurs très importantes qui sont requises pour la fabrication d'écrans complexes (l'épaisseur de la couche de milieu de compensation étant bien entendu ajustée, en vue d'une compensation optimale, en fonction de l'épaisseur de la couche de cristal liquide).

En outre, la cellule objet de l'invention est avantageusement compatible avec tout moyen de polarisation (rectiligne, circulaire ou elliptique).

La présente invention permet ainsi de réaliser des dispositifs d'affichage qui comportent une forte épaisseur de cristal liquide et peuvent donc avoir un taux de multiplexage élevé, et oui sont achromatiques, préservant ainsi la pureté des couleurs affichées et la stabilité de ces couleurs sous observation oblique.

Dans une réalisation particulière de la cellule objet de l'invention, tes deux électrodes sont transparentes, la cellule comprend deux moyens de polarisation complémentaires l'un de l'autre, situés de part et d'autre de l'ensemble formé par la couche de cristal liquide et les deux électrodes et chaque couche de milieu de compensation est comprise entre l'un des moyens de polarisation et ledit ensemble.

Par "moyens de polarisation complémentaires l'un de l'autre" on entend par exemple deux polariseurs rectilignes croisés, ou deux polariseurs circulaires ou elliptiques complémentaires l'un de l'autre vis-à-vis d'une onde lumineuse plane incidente se propageant suivant la direction d'homéotropie, ou plus brièvement, respectivement gauche et droit vis-à-vis de cette onde.

Dans un mode de réalisation particulier, les deux moyens de polarisation sont des polariseurs rectilignes croisés et le milieu de compensation est un milieu uniaxe d'anisotropie optique négative, ayant un axe de symétrie parallèle à la direction d'homéotropie et un axe extraordinaire parallèle à cet axe de symétrie.

Dans un autre mode de réalisation particulier, les deux moyens de polarisation sont des polariseurs circulaires complémentaires l'un de l'autre et le milieu de compensation est un milieu uniaxe d'anisotropie optique négative, ayant un axe de symétrie parallèle à la direction d'homéotropie et un axe extraordinaire parallèle à cet axe de symétrie.

Dans ces deux modes de réalisation particuliers, le milieu de compensation peut être fait à partir d'un matériau polymère.

De préférence, ce polymère est thermo-plastique. Un tel polymère permet en effet de réaliser, de façon assez simple comme on le verra par la suite, une couche qui permet non seulement de compenser la biréfringence mais encore de coller l'un à l'autre deux composants de la cellule entre lesquels elle se trouve.

Précisément, dans le cas où la cellule objet de l'invention est destinée à l'affichage en couleur et comprend à cet effet un substrat muni d'au moins un filtre coloré, ce substrat peut être avantageusement maintenu en place par la couche de ce polymère thermo-plastique.

Selon un autre mode de réalisation particulier, les deux moyens de polarisation sont des polariseurs rectilignes croisés et le milieu de compensation est un milieu biaxe dont l'axe de plus faible indice est parallèle à la direction d'homéotropie.

De préférence, le produit de l'épaisseur de chaque couche de ce milieu par la valeur absolue de la différence entre les deux autres indices principaux de ce milieu est de l'ordre de 0.125 micromètre, ce qui permet à cette couche de constituer dans le domaine visible une lame à retard quasi quart d'onde.

Dans une réalisation particulière de l'invention, correspondant à une cellule selon l'invention dont les électrodes sont transparentes, ladite cellule comprend en outre une couche optiquement réflectrice placée à une extrémité de la cellule, du côté opposé à celui qui est destiné à être exposé à une lumière incidente.

On verra plus loin un procédé de fabrication d'une couche d'un milieu uniaxe d'anisotropie optique négative, ayant un axe de symétrie perpendiculaire à ladite couche et un axe extraordinaire parallèle à cet axe de symétrie, ce procédé comprenant les étapes successives suivantes :
- on soumet chaque côté d'une couche (simple ou multiple) d'un matériau polymère thermoplastique, maintenue plane, à une pression uniforme,
- on effectue un chauffage de la couche maintenue dans cet état de pression jusqu'à ce qu'elle passe de sa phase vitreuse à sa phase isotrope,
- on cesse le chauffage et
- l'on supprime la pression.

Un tel procédé permet d'obtenir assez simplement ladite couche d'un milieu uniaxe d'anisotropie optique négative, qui est utilisable dans certaines réalisations de la cellule objet de l'invention.

Cette couche de milieu uniaxe peut être maintenue plane au moyen de deux substrats plans, transparents et rigides entre lesquels elle est placée.

Enfin, la présente invention a également pour objet un procédé de fabrication d'une cellule à cristal liquide utilisant l'effet de biréfringence contrôlée électriquement et comprenant :
- deux substrats plans et transparents qui présentent entre eux un intervalle, sont fixés l'un à l'autre, et sont munis d'électrodes,
- au moins un moyen de polarisation, les deux substrats étant placés d'un côté de celui-ci, et éventuellement
- un substrat muni d'au moins un filtre coloré, procédé caractérisé en ce que l'on maintient en place au moins l'un des éléments pris dans le groupe comprenant chaque moyen de polarisation et le substrat muni d'au moins un filtre coloré
- en disposant, entre cet élément et un composant adjacent de la cellule, au moins une couche d'un matériau polymère thermoplastique, puis
- en soumettant les deux côtés de l'assemblage des composants de la cellule à une pression uniforme, puis
- en effectuant un chauffage de cet assemblage maintenu dans cet état de pression jusqu'à ce que chaque couche de matériau passe de sa phase vitreuse à sa phase isotrope, puis
- en cessant le chauffage, et
- en supprimant la pression,
une couche de cristal liquide nématique étant ultérieurement introduite entre les substrats munis d'électrodes.

Ce procédé permet avantageusement d'intégrer la fabrication d'une ou de plusieurs couches de milieu uniaxe d'anisotropie optique négative, que l'on peut être amené à utiliser dans une cellule selon la présente invention, à la fabrication proprement dite de cette cellule et plus précisément à l'étape de scellement de celle-ci.

La présente invention sera mieux comprise à la lecture de la description qui suit, d'exemples de réalisation donnés à titre purement indicatif et nullement limitatif, en référence aux dessins annexés sur lesquels :
- la figure 1 est une vue éclatée schématique d'un premier mode de réalisation particulier de la cellule objet de l'invention,
- la figure 2 est une vue éclatée schématique d'un second mode de réalisation particulier de cette cellule,
- la figure 3 est une vue éclatée schématique d'un troisième mode de réalisation particulier de cette cellule,
- la figure 4 illustre schématiquement un mode procédé permettant la fabrication d'une couche d'un milieu uniaxe d'anisotropie optique négative, utilisable dans la présente invention,
- la figure 5 illustre schématiquement l'intégration de ce procédé à l'étape de scellement d'une cellule réalisée conformément à l'invention, et
- la figure 6 est une vue éclatée schématique d'une cellule selon la présente invention, illustrant également l'intégration de la fabrication de plusieurs couches de milieu uniaxe d'anisotropie optique négative, utilisées dans cette cellule, à l'étape de scellement de celle-ci.

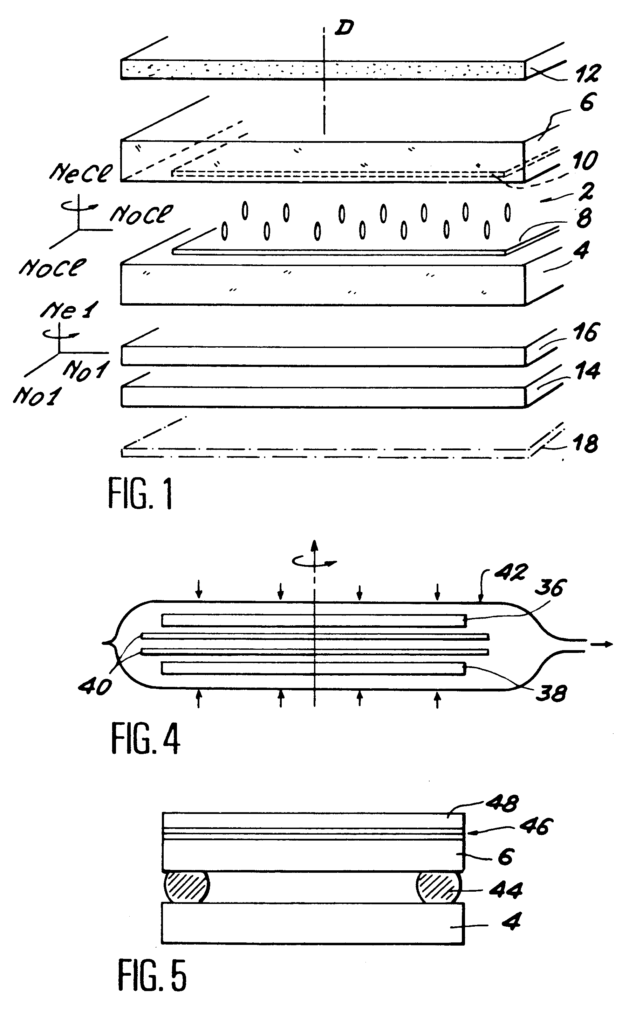

Sur la figure 1, on a représenté schématiquement, en vue éclatée, une cellule à cristal liquide correspondant à un premier mode de réalisation particulier de l'invention. Cette cellule comprend une couche 2 de cristal liquide comprise entre une plaque inférieure 4 et une plaque supérieure 6 parallèles et transparentes, par exemple en verre. Des électrodes 8 et 10 transparentes sont respectivement disposées sur les faces des plaques 4 et 6, qui sont directement en regard l'une de l'autre.

Un premier et un second polariseurs rectilignes croisés 12 et 14 encadrent l'ensemble constitué par la couche 2 et par les deux plaques 4 et 6, le premier polariseur 12 étant du côté de la plaque 6 et le second polariseur 14 étant du côté de la plaque 4. La cellule est destinée à être éclairée par une lumière qui tombe sur le premier polariseur 12 et observée à travers le second polariseur 14. Ces deux polariseurs se présentent sous la forme de lames qui sont parallèles aux plaques 4 et 6.

La cellule comprend en outre une lame ou feuille 16 d'un milieu de compensation, qui est disposée entre la plaque inférieure 4 et le second polariseur 14, parallèlement à ceux-ci, et sur laquelle des précisions seront données par la suite.

La cellule que l'on vient de décrire fonctionne en mode transmissif. Elle pourrait fonctionner en mode réflectif en lui ajoutant une couche optiquement réflectrice 18 disposée à l'opposé de la lame 16 par rapport au second polariseur 14, parallèlement à celui-ci et en observant alors la cellule à travers le premier polariseur 12.

La couche de cristal liquide utilisée est une couche de cristal liquide nématique d'anisotropie diélectrique négative, dont les molécules sont sensiblement orientées suivant une direction D perpendiculaire aux plaques 4 et 6, appelée direction d'homéotropie, en l'absence de tension électrique entre les électrodes. Cette couche de cristal liquide nématique est en outre un milieu uniaxe d'anisotropie optique positive, l'indice extraordinaire NeCl de ce milieu étant supérieur à son indice ordinaire NoCl. L'ellipsoïde des indices de ce milieu a un axe de symétrie qui est l'axe de fort indice (NeCl dans le cas présent), et qui est parallèle aux grands axes des molécules de cristal liquide, ainsi qu'à la direction d'homéotropie en l'absence de tension électrique entre les électrodes.

La lame 16 de compensation est un milieu uniaxe d'anisotropie optique négative, l'indice extraordinaire Ne1 de ce milieu étant inférieur à son indice ordinaire No1. L'ellipsoïde des indices de ce milieu a un axe de symétrie qui est l'axe de faible indice (Ne1 dans le cas présent) et qui est parallèle à la direction d'homéotropie.

A titre purement indicatif et nullement limitatif, la couche 2 de cristal liquide est réalisée à partir du matériau commercialisé par la Société MERCK sous la référence ZLI 1936 (avec NeCl-NoCl=0,19) et a une épaisseur de 5 micromètres, et la lame 16 est un empilement de 15 feuilles de 50 micromètres d'épaisseur chacune, du polymère thermoplastique commercialisé par la Société Dupont de Nemours sous la marque SURLYN.

En fait, l'épaisseur optimale de la lame 16 dépend de l'épaisseur de la couche de cristal liquide (loi linéaire) et cette épaisseur de la lame 16 est déterminable expérimentalement, en fixant l'épaisseur de la couche de cristal liquide et en cherchant l'épaisseur de la lame 16 qui conduit à un contraste optimal sous un angle d'observation donné.

En outre, la lame 16 pourrait être disposée entre la plaque 6 et le polariseur 12 au lieu d'être disposée entre la plaque 4 et la polariseur 14.

Plus généralement, il est possible de remplacer la lame 16 par une pluralité de couches disposées les unes entre la plaque 6 et le polariseur 12 et les autres entre la plaque 4 et le polariseur 14, l'épaisseur totale de ces couches étant égale à l'épaisseur déterminée pour la lame 16.

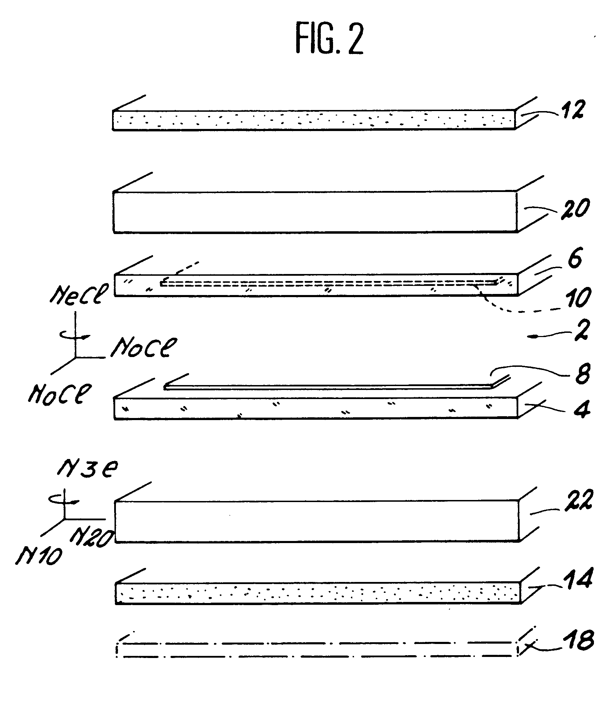

Sur la figure 2, on a représenté schématiquement, en vue éclatée, un second mode de réalisation particulier de la cellule objet de l'invention. La cellule représentée sur la figure 2 comporte une couche de cristal liquide 2 comprise entre deux plaques de verre 4 et 6 munies d'électrodes transparentes 8 et 10 ainsi que deux polariseurs 12 et 14 rectilignes croisés et éventuellement une couche optiquement réflectrice 18 (pour un fonctionnement en mode réflectif, la cellule étant alors éclairée par une lumière tombant sur le polariseur 12 et également observée à travers celui-ci), dont la disposition relative a déjà été indiquée dans la description de la figure 1.

La cellule représentée sur la figure 2 comporte en outre une lame 20 disposée entre la plaque 6 et le polariseur 12 et une lame 22 disposée entre la plaque 4 et le polariseur 14, ces lames 20 et 22 étant parallèles aux plaques 4 et 6. Les caractéristiques optiques de la couche de cristal liquide nématique 2 ont déjà été indiquées dans la description de la figure 1.

Chaque lame 20 ou 22 est quant à elle un milieu biaxe qui a deux indices principaux N1o et N2o ayant des valeurs proches l'une de l'autre et un troisième indice N3e inférieur à N1o et N2o, l'axe de faible indice (N3e) étant parallèle à la direction d'homéotropie.

De préférence, les lames 20 et 22 ont des épaisseurs sensiblement égales et le produit de la valeur absolue de (N1o-N2o) par l'une ou l'autre de ces épaisseurs est choisi de façon à être peu différent de 0,125 micromètre (condition 1) pour chacune des lames 20 et 22 qui constitue alors, dans le domaine visible, une lame à retard quasi quart d'onde.

Cette valeur de 0,125 micromètre correspond au maximum de brillance de la cellule représentée sur la figure 2, dans l'état "blanc" correspondant à la cellule sous tension d'excitation.

L'épaisseur optimale de chaque lame 20 ou 22 (conduisant à un contraste optimal pour un angle d'observation et une épaisseur de cristal liquide donnés) est déterminable expérimentalement en fonction de l'épaisseur choisie pour la couche de cristal liquide. On pourrait d'ailleurs n'utiliser qu'une lame de compensation disposée soit entre la plaque 6 et le polariseur 12, soit entre la plaque 4 et le polariseur 14, cette lame unique ayant alors une épaisseur égale à la somme des épaisseurs des lames 20 et 22, déterminées en fonction de l'épaisseur de la couche de cristal liquide.

Cependant, dans le mode de réalisation préférentiel indiqué plus haut, l'épaisseur des lames 20 et 22 étant déjà fixée par la condition 1, la compensation optimale de la biréfringence de la couche de cristal liquide est déterminée en choisissant un matériau constitutif des lames 20 et 22 qui a un indice extraordinaire N3e optimal pour cette compensation.

A titre purement indicatif et nullement limitatif, la couche de cristal liquide est réalisée à partir du matériau commercialisée par la Société MERCK sous la référence ZLI 1936, avec NeCl - NoCl = 0,19, et a une épaisseur comprise entre 4 et 6 micromètres, et chacune des lames 20 et 22 est réalisée à partir d'une feuille de cellophane qui est commercialisée par la Société Rhône Poulenc et qui a une épaisseur de l'ordre de 3,5 à 4 micromètres, l'indice N1o étant égal à 1,660, l'indice N2o étant égal à 1,6425 et l'indice N3e étant égal à 1,5000.

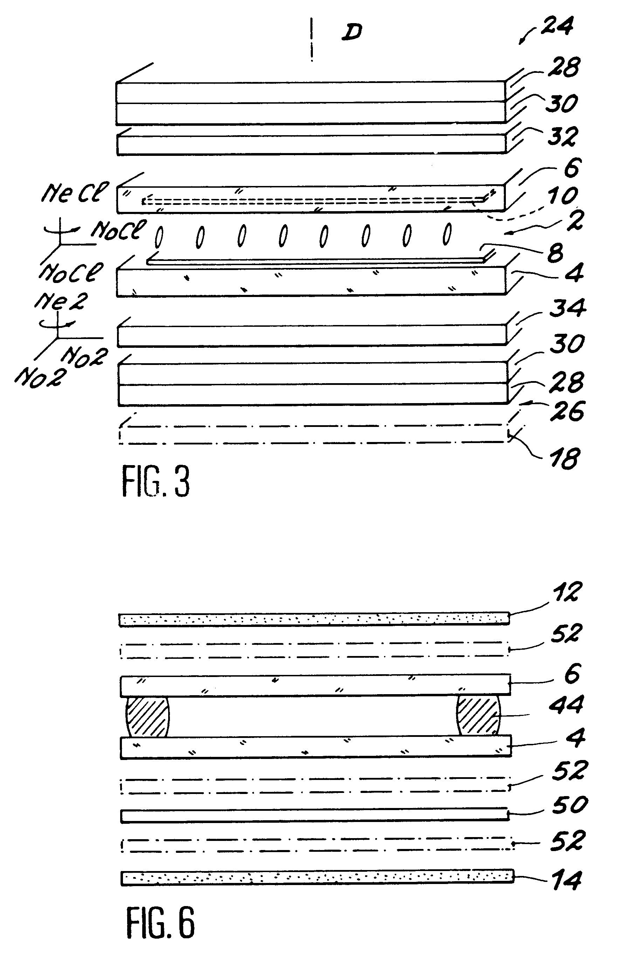

Sur la figure 3, on a représenté un troisième mode de réalisation particulier de la cellule objet de l'invention. La cellule représentée sur la figure 3 comprend une couche de cristal liquide 2 comprise entre deux plaques de verre 4 et 6 munies respectivement d'électrodes transparentes 8 et 10, la disposition de ces éléments ayant été expliquée dans la description de la figure 1. Les caractéristiques optiques de la couche de cristal liquide 2 ont également été données dans la description de cette figure 1.

La cellule représentée sur la figure 3 comprend en outre un premier polariseur circulaire 24 et un second polariseur circulaire 26 qui encadrent l'ensemble constitué par les plaques 4 et 6 et la couche 2, le premier polariseur 24 étant du côté de la plaque 6, de sorte que ce polariseur reçoit la lumière incidente et le second polariseur 26 étant du côté de la plaque 4, ces polariseur 24 et 26 étant parallèles aux plaques 4 et 6 et la cellule étant observée à travers le polariseur 26. Les polariseurs 24 et 26 sont en outre complémentaires l'un de l'autre c'est-à-dire que, pour la lumière incidente, l'un des polariseur est gauche et l'autre polariseur est droit.

Comme précédemment, pour un fonctionnement en mode réflectif, une couche optiquement réflectrice 18 peut être prévue à l'opposé de la plaque 4 par rapport au polariseur 26, la cellule étant alors observée à travers le polariseur 24.

Ce polariseur 24 est constitué d'un polariseur rectiligne 28 associé à une lame quart d'onde 30 qui est réalisée dans un milieu uniaxe d'anisotropie optique positive, le grand axe de ce milieu étant compris dans le plan du polariseur 28 (c'est-à-dire perpendiculaire à la direction d'homéotropie) et formant avec la direction de polarisation de ce polariseur 28 un angle de 45°.

De même, le second polariseur circulaire 26 est identique au premier polariseur 24, les lames quart d'onde 30 des polariseur 24 et 26 faisant respectivement face aux plaques 6 et 4.

La cellule représentée sur la figure 3 comprend également au moins une lame d'un matériau uniaxe d'anisotropie optique négative dont les caractéristiques optiques sont celles de la lame 16 décrite en référence à la figure 1 et qui est disposée parallèlement aux plaques 4 et 6, entre l'une de ces plaques et l'un des polariseurs circulaires.

Dans le cas de la figure 3, la cellule comporte deux telles lames 32 et 34, la lame 32 étant disposée entre la plaque 6 et le polariseur 24 et la lame 34 étant disposée entre la plaque 4 et le polariseur 26.

L'épaisseur optimale (contraste optimal sous un angle d'observation donné) de la lame unique 32 ou 34 (ou l'épaisseur optimale totale des lames 32 et 34) est déterminée en fonction de l'épaisseur de la couche de cristal liquide 2. L'utilisation d'une ou de plusieurs lames de matériau uniaxe d'anisotropie optique négative dans la cellule de la figure 3 permet de maîtriser séparément :
- l'ellipticité presque circulaire, dans tout le domaine visible, de l'onde qui traverse la couche de cristal liquide (ce qui conduit à un meilleur rendement lumineux dans l'état blanc de la cellule), et
- le comportement compensateur du système comprenant cette lame de matériau uniaxe d'anisotropie optique négative et les deux polariseurs circulaires, la compensation dépendant de la préparation de ladite lame.

Chaque lame de compensation utilisée dans la cellule de la figure 3 est réalisée de la même manière que chaque lame de compensation utilisée dans la cellule de la figure 1 et sa fabrication (de même que celle de chaque lame de la cellule de la figure 1) peut être intégrée à l'étape de scellement de la cellule qui l'utilise, comme on le verra par la suite.

Pour une même épaisseur de cristal liquide, l'épaisseur de matériau uniaxe d'anisotropie optique négative, qui est nécessaire pour réaliser la cellule de la figure 3, est inférieure à l'épaisseur dudit matériau qui est nécessaire pour réaliser la cellule représentée sur la figure 1 étant donné l'utilisation, dans la cellule de la figure 3, de lames à retard quart d'onde.

A titre purement indicatif et nullement limitatif, la cellule représentée sur la figure 3 comporte une couche de cristal liquide de 5 micromètres d'épaisseur, réalisée à partir du matériau commercialisé par la Société MERCK sous la référence ZLI 1936, avec NeCl - NoCl = 0,19, chaque polariseur circulaire est du genre de celui-ci qui est commercialisé par la Société POLAROID sous la référence HCP 37 et chacune des lames 32 et 34 est constituée par un empilement de 5 feuilles du matériau commercialisé par la Société Dupont de Nemours sous la référence SURLYN, chaque feuille ou film ayant une épaisseur de 80 micromètres.

Sur la figure 4, on a illustré schématiquement un procédé de fabrication d'une couche d'un milieu uniaxe d'anisotropie optique négative, présentant un axe de symétrie perpendiculaire à ladite couche, l'axe de plus faible indice de cette couche étant parallèle à cet axe de symétrie. Une telle couche est utilisable dans la réalisation des cellules représentées sur les figures 1 et 3.

Le procédé est le suivant : on dispose entre deux substrat 36 et 38 transparents, plans et rigides, une ou plusieurs feuilles 40 d'un matériau thermoplastique par exemple du genre de celui qui est commercialisé par la Société Dupont de Nemours sous la marque SURLYN. A température ambiante, un tel matériau est à l'état vitreux mais présente une biréfringence qui dépend de son histoire antérieure. Par chauffage à une température appropriée, le matériau passe de l'état vitreux à l'état isotrope, état dans lequel il ne présente plus de biréfringence.

Les substrats 36 et 38 sont par exemple deux plaques de verre du genre des plaques 4 et 6 utilisées dans la cellule décrite en référence à la figure 1.

La ou les feuilles étant disposées entre les substrats, une pression uniforme est appliquée sur chacun desdits substrats (normalement à ceux-ci). Pour ce faire, on peut introduire l'ensemble constitué par la ou les feuilles et les substrats dans un sac en plastique 42 qui est en outre étuvable pour une raison indiquée par la suite, puis faire le vide dans ce sac et sceller thermiquement celui-ci.

Une pression uniforme égale à la pression atmosphérique est alors appliquée sur chaque substrat.

On chauffe ensuite le sac contenant l'ensemble en question, par exemple dans une étuve, jusqu'à ce que le matériau thermoplastique atteigne sa température de transition état vitreux-état isotrope, après quoi l'on sort le sac de l'étuve et l'on ouvre ce sac.

Le matériau se refroidit alors et se rétracte. Cette rétractation ne peut s'effectuer que dans une seule direction perpendiculaire aux deux substrats. Il apparaît ainsi un axe de symétrie S perpendiculaire à cette direction, dans ce matériau qui, retrouvant son état vitreux, repasse à l'état biréfringent. On obtient ainsi effectivement une couche d'un milieu uniaxe d'anisotropie optique négative, ayant un axe de symétrie qui est perpendiculaire à ladite couche et porte l'axe extraordinaire du milieu.

Le procédé que l'on vient de décrire en référence à la figure 4 s'intègre directement de façon avantageuse, à un procédé de fabrication d'une cellule à cristal liquide selon la présente invention, et plus précisément à l'étape de scellement de cette cellule, ce scellement s'effectuant à chaud et sous pression (avant l'introduction du cristal liquide dans ladite cellule).

La figure 5 illustre cette intégration : étant donné deux plaques de verre 4 et 6 qui sont munies d'électrodes transparentes non représentées et de moyens de scellement 44 et entre lesquelles doit être introduite ultérieurement une couche de cristal liquide, il est possible de disposer une ou plusieurs feuilles de polymère thermoplastique 46 entre l'une des plaques 4 et 6 et un substrat transparent 48 qui peut être l'un des polariseurs de la cellule ou une plaque de verre portant des filtres colorés lorsque la cellule est destinée à l'affichage en couleur.

La plaque de verre 6 et le substrat 48 jouent alors le rôle des substrats 36 et 38 mentionnés dans la description de la figure 4.

Plus précisément, l'ensemble constitué par les substrats 4, 6 et 48 et la ou les couches 46 est introduit dans un sac en plastique étuvable, le vide est fait dans ce sac et celui-ci est introduit dans une étuve. Après atteinte par le matériau thermo-plastique de sa température de transition (connue pour un matériau donné) le sac est sorti de l'étuve et ouvert. Comme précédemment, lors du refroidissement qui s'ensuit, la feuille, ou l'ensemble des feuilles collées par étuvage les unes aux autres, devient une couche d'un milieu uniaxe d'anisotropie optique négative, ayant un axe de symétrie perpendiculaire à ladite couche et portant l'axe extraordinaire du milieu.

En outre, du fait du chauffage et de la pression, la couche ainsi obtenue permet de coller l'un à l'autre la plaque 6 et le substrat 48.

A titre purement indicatif et nullement limitatif, pour un matériau du type SURLYN, la pression uniforme appliquée est de l'ordre de 10⁵Pa à 2.10⁵Pa et le chauffage est effectué à une température au moins égale à 100°C, la température de transition de ce matériau étant de l'ordre de 90°C.

On comprend donc bien la possibilité d'intégrer la formation d'une ou plusieurs couches de milieu uniaxe d'anisotropie optique négative à la fabrication d'une cellule selon l'invention, utilisant cette ou ces couches.

La figure 6 illustre également cette possibilité d'intégration : on envisage par exemple de réaliser une cellule selon l'invention, destinée à l'affichage en couleur. A cet effet, on peut réaliser une cellule du genre de celle qui est représentée sur la figure 1, munie en outre d'un filtre trichrome 50 placé par exemple entre la plaque inférieure 4 et le polariseur 14, parallèlement à ceux-ci, le nombre et la configuration des électrodes qui sont de part et d'autre de la couche de cristal liquide, étant bien entendu adaptés au filtre.

La lame 16 de polymère thermo-plastique qui est représentée sur la figure 1 et dont l'épaisseur optimale a été déterminée, est remplacée, dans le cas de la cellule représentée sur la figure 6, par trois couches 52 de même nature que la lame 16 mais dont la somme des épaisseurs est égale à celle de cette lame 16.

Par un procédé analogue à celui qui a été décrit en référence à la figure 5 (application d'une pression uniforme sur les polariseurs 12 et 14, chauffage dans cet état de pression jusqu'à la température de transition du polymère thermo-plastique, suppression du chauffage puis de la pression), on obtient ainsi une cellule assemblée dans laquelle on introduit ensuite la couche de cristal liquide entre les plaques 4 et 6.

D'autres réalisations particulières de la cellule objet de l'invention sont possibles, et notamment une réalisation dans laquelle cette cellule comporte successivement, à partir du côté destiné a être exposé à une lumière incidente, un polariseur circulaire, une lame d'un milieu uniaxe d'anisotropie optique négative, une première plaque de verre, une couche de cristal liquide nématique et une seconde plaque de verre, la première plaque étant munie d'électrodes transparentes en regard de la couche de cristal liquide et la seconde plaque étant munie, en regard de cette couche, d'une couche optiquement réflectrice.

## Revendications

1. Cellule à cristal liquide, à biréfringence contrôlée électriquement, comprenant :
- une première et une deuxième plaques (6, 4) parallèles et en face l'une de l'autre ;
- des électrodes (10, 8) déposées sur les faces intérieures desdites plaques (6, 4), au moins celle qui est déposée sur la face intérieure de la première plaque (6) étant transparente ;
- une couche de cristal liquide (2) nématique, d'anisotropie optique positive, confinée entre lesdites plaques (6, 4) ; et
- au moins un moyen de polarisation (12, 14; 24, 26) situé sur la face extérieure de ladite première plaque (6) ;
la cellule étant caractérisée en ce qu'elle comprend en outre au moins une couche (16 ou 20, 2; 32, 34) d'un milieu de compensation de la biréfringence de la couche de cristal liquide nématique dans sa structure homéotrope pour une observation oblique de la cellule, ledit milieu ayant trois indices optiques principaux dont l'un est plus faible que les deux autres, l'axe correspondant à cet indice plus faible étant parallèle à la direction d'homéotropie de la cellule.

2. Cellule selon la revendication 1, caractérisée en ce que les deux électrodes (8, 10) sont transparentes, en ce que la cellule comprend deux moyens de polarisation (12, 14; 24, 26) complémentaires l'un de l'autre, situés de part et d'autre de l'ensemble formé par la couche de cristal liquide, les plaques et les deux électrodes et en ce que chaque couche (16 ou 20, 22; 32, 34) de milieu de compensation est comprise entre l'un des moyens de polarisation et ledit ensemble.

3. Cellule selon la revendication 2, caractérisée en ce que les deux moyens de polarisation sont des polariseurs rectilignes croisés (12, 14) et en ce que le milieu de compensation est un milieu uniaxe d'anisotropie optique négative (16), ayant un axe de symétrie parallèle à la direction d'homéotropie et un axe extraordinaire parallèle à cet axe de symétrie.

4. Cellule selon la revendication 2, caractérisée en ce que les deux moyens de polarisation sont des polariseurs circulaires (24, 26) complémentaires l'un de l'autre et en ce que le milieu de compensation est un milieu uniaxe d'anisotropie optique négative (32, 34), ayant un axe de symétrie parallèle à la direction d'homéotropie et un axe extraordinaire parallèle à cet axe de symétrie.

5. Cellule selon l'une quelconque des revendications 3 et 4, caractérisée en ce que le milieu de compensation est fait à partir d'un matériau polymère.

6. Cellule selon la revendication 5, caractérisée en ce que ce polymère est thermoplastique.

7. Cellule selon la revendication 6, caractérisée en ce qu'elle comprend en outre un substrat (50) muni d'au moins un filtre coloré, qui est maintenu en place par la couche de ce polymère thermoplastique.

8. Cellule selon la revendication 2, caractérisée en ce que les deux moyens de polarisation sont des polariseurs rectilignes croisés (12, 14) et en ce que le milieu de compensation est un milieu biaxe (20, 22) dont l'axe de plus faible indice est parallèle à la direction d'homéotropie.

9. Cellule selon la revendication 8, caractérisée en ce que le produit de l'épaisseur de chaque couche (20, 22) de ce milieu par la valeur absolue de la différence entre les deux autres indices principaux de ce milieu est de l'ordre de 0,125 micromètre.

10. Cellule selon l'une quelconque des revendications 2 à 9, caractérisée en ce qu'elle comprend en outre une couche optiquement réflectrice (18) sur la face extérieure de ladite cellule, du côté de la dite deuxième plaque (4).

11. Procédé de fabrication d'une cellule à cristal liquide utilisant l'effet de biréfringence contrôlée électriquement, ce procédé comprenant les étapes suivantes :
- on dispose une première électrode transparente sur un premier substrat plan et transparent (46),
- on dispose une deuxième électrode sur un deuxième substrat plan et transparent (46),
- on dispose les deux substrats parallèlement et en face l'un de l'autre, de façon que les électrodes soient en face l'une de l'autre,
- on munit les substrats d'au moins un moyen de polarisation, ce moyen de polarisation étant en regard de la face extérieure du premier substrat,
procédé caractérisé en ce que :
- on dispose, entre le moyen de polarisation et le premier substrat, au moins une couche (52) d'un matériau polymère thermoplastique,
- on soumet les deux côtés de l'assemblage ainsi obtenu à une pression uniforme,
- on effectue un chauffage de cet assemblage maintenu dans cet état de pression jusqu'à ce que chaque couche de matériau passe de sa phase vitreuse à sa phase isotrope,
- on cesse le chauffage,
- on supprime la pression, et
- on introduit une couche de cristal liquide nématique entre les deux substrats.

12. Procédé selon la revendication 11, caractérisé en ce que, avant d'appliquer la pression uniforme, on ajoute à l'assemblage un substrat (50) muni d'au moins un filtre coloré.

## Claims

1. Liquid crystal cell with electrically controlled birefringence comprising a first and a second parallel plates (6, 4) facing one another, electrodes (10, 8) deposited on the inner faces of said plates (6, 4), at least that which is deposited on the inner face of the first plate (6) being transparent, a nematic liquid crystal layer (2) having a positive optical anisotropy confined between the said plates (6, 4) and at least one polarizing means (12, 14, 24, 26) located on the outer face of said first plate (6), the cell being characterized in that it comprises at least one layer (16 or 20, 2; 32, 34) of a medium compensating the birefringence of the nematic liquid crystal layer in its homeotropic structure for an oblique observation of the cell, said medium having three main optical indices, whereof one is lower than the two others, the axis corresponding to the lower index being parallel to the homeotropy direction of the cell.

2. Cell according to claim 1, characterized in that the two electrodes (8, 10) are transparent, in that the cell comprises two complimentary polarizing means (12, 14; 24, 26) on either side of the assembly formed by the liquid crystal layer, the plates and the two electrodes and in that each layer (16 or 20, 22; 32,, 34) of the compensating medium is between one of the polarizing means and said assembly.

3. Cell according to claim 2, characterized in that the two polarizing means are crossed linear polarizers (12, 14) and in that the compensating medium is a uniaxial medium of negative optical anisotropy (16), having an axis of symmetry parallel to the homeotropy direction and an extraordinary axis parallel to said axis of symmetry.

4. Cell according to claim 2, characterized in that the two polarizing means are circular polarizers (24, 26) complimentary of one another and in that the compensating medium is a uniaxial medium of negative optical anisotropy (32, 34) having an axis of symmetry parallel to the homeotropy direction and an extraordinary axis parallel to said axis of symmetry.

5. Cell according to any one of the claims 3 and 4, characterized in that the compensating medium is formed from a polymeric material.

6. Cell according to claim 5, characterized in that said polymer is thermoplastic.

7. Cell according to claim 6, characterized in that it also comprises a substrate (50) provided with at least one coloured filter, which is maintained in place by the thermoplastic polymer layer.

8. Cell according to claim 2, characterized in that the two polarizing means are crossed linear polarizers (12, 14) and in that the compensating medium is a biaxial medium (20, 22), whose smallest index axis is parallel to the homeotropy direction.

9. Cell according to claim 8, characterized in that the product of the thickness of each layer (20, 22) of this medium by the absolute value of the difference between the two other main indices of said medium is approximately 0.125 micrometre.

10. Cell according to any one of the claims 2 to 9, characterized in that it also comprises an optically reflective coating (18) on the outer face of said cell on the side of said second plate (4).

11. Process for the production of a liquid crystal cell using the electrically controlled birefringence effect, said process comprising the following stages:
- a first transparent electrode is placed on a first planar, transparent substrate (46),
- a second electrode is placed on a second planar, transparent substrate (46),
- the two substrates are arranged in parallel and facing one another, so that the electrodes face one another,
- the substrates are provided with at least one polarizing means, which faces the outer face of the first substrate,
process characterized in that:
- between the polarizing means and the first substrate is placed at least one layer (52) of a thermoplastic polymer material,
- the two sides of the thus obtained assembly is subject to a uniform pressure,
- the assembly maintained in this pressure state is heated until each material layer passes from its vitreous phase to its isotropic phase,
- heating is stopped,
- pressure is stopped, and
- a nematic liquid crystal layer is introduced between the two substrates.

12. Process according to claim 11, characterized in that, prior to applying the uniform pressure, a substrate (50) provided with at least one coloured filter is added to the assembly.

## Patentansprüche

1. Flüssigkristallzelle mit elektrisch gesteuerter Doppelbrechung, umfassend
- eine erste und eine zweite Platte (6, 4), die parallel sind und einander gegenüberstehen,
- Elektroden (10, 8), die auf den Innenseiten dieser Platten aufgebracht sind, wobei zumindest die auf der Innenseite der ersten Platte (6) aufgebrachte Elektrode transparent ist,
- eine Schicht von nematischem Flüssigkristall (2) positiver optischer Anisotropie, die zwischen diesen Platten (6, 4) eingeschlossen ist, und
- mindestens eine Polarisationseinrichtung (12, 14; 24, 26), die sich auf der Außenseite der ersten Platte befindet,
wobei die Zelle dadurch gekennzeichnet ist, daß sie ferner mindestens eine Schicht (16 oder 20, 2; 32, 34) eines Mediums zur Kompensation der Doppelbrechung der Schicht des nematischen Flüssigkristalls in seiner homöotropen Struktur für eine schiefe Betrachtung der Zelle umfaßt, wobei dieses Medium drei optische Hauptindices hat, von denen der eine kleiner als die beiden anderen ist und die Achse, die diesem kleineren Index entspricht, parallel zur Homöotropierichtung der Zelle ist.

2. Zelle nach Anspruch 1, dadurch gekennzeichnet, daß die beiden Elektroden (8, 10) transparent sind, daß die Zelle zwei zueinander komplementäre Polarisationseinrichtungen (12, 14; 24, 26) umfaßt, die auf der einen und auf der anderen Seite der von der Flüssigkristallschicht, den Platten und den beiden Elektroden gebildeten Anordnung liegen, und daß jede Schicht (16 oder 20, 22; 32, 34) des Kompensationsmediums zwischen einer der Polarisationseinrichtungen und der genannten Anordnung enthalten ist.

3. Zelle nach Anspruch 2, dadurch gekennzeichnet, daß die beiden Polarisationseinrichtungen gekreuzte Linearpolarisatoren (12, 14) sind und daß das Kompensationsmedium ein einachsiges Medium (16) negativer optischer Anisotropie ist, das eine Symmetrieachse parallel zur Homöotropierichtung und eine außerordentliche Achse parallel zu dieser Symmetrieachse hat.

4. Zelle nach Anspruch 2, dadurch gekennzeichnet, daß die zwei Polarisationseinrichtungen zueinander komplementäre Zirkularpolarisatoren (24, 26) sind und daß das Kompensationsmedium ein einachsiges Medium negativer optischer Anisotropie (32, 34) ist, das eine Symmetrieachse parallel zur Homöotropierichtung und eine außerordentliche Achse parallel zu dieser Symmetrieachse hat.

5. Zelle nach einem der Ansprüche 3 und 4, dadurch gekennzeichnet, daß das Kompensationsmedium aus einem Polymerwerkstoff hergestellt ist.

6. Zelle nach Anspruch 5, dadurch gekennzeichnet, daß dieses Polymere thermoplastisch ist.

7. Zelle nach Anspruch 6, dadurch gekennzeichnet, daß sie ferner ein Substrat (50) umfaßt, das mit wenigstens einem gefärbten Filter versehen ist, der durch die Schicht dieses thermoplastischen Polymeren an seinem Platz gehalten wird.

8. Zelle nach Anspruch 2, dadurch gekennzeichnet, daß die beiden Polarisationseinrichtungen gekreuzte Linearpolarisatoren (12, 14) sind und daß das Kompensationsmedium ein zweiachsiges Medium (20, 22) ist, bei dem die Achse des kleineren Index parallel zur Homöotropierichtung ist.

9. Zelle nach Anspruch 8, dadurch gekennzeichnet, daß das Produkt aus der Dicke jeder Schicht (20, 22) dieses Mediums und dem Absolutwert der Differenz der zwei anderen Hauptindices dieses Mediums von der Größenordnung 0,125 Mikrometer ist.

10. Zelle nach einem der Ansprüche 2 bis 9, dadurch gekennzeichnet, daß sie ferner auf der Seite der genannten zweiten Platte (4) eine optisch reflektierende Schicht (18) auf der Außenfläche der Zelle umfaßt.

11. Verfahren zur Herstellung einer Flüssigkristallzelle, die den Effekt der elektrisch gesteuerten Doppelbrechung benutzt, wobei dieses Verfahren die folgenden Schritte umfaßt:
- eine erste transparente Elektrode auf einem ersten ebenen und transparenten Substrat (46) aufzubringen,
- eine zweite Elektrode auf einem zweiten ebenen und transparenten Substrat (46) aufzubringen,
- die beiden Substrate parallel und einander gegenüber anzuordnen, so daß die Elektroden sich gegenüberstehen,
- die Substrate mit zumindest einer Polarisationseinrichtung zu versehen, wobei diese Polarisationseinrichtung der Außenfläche des ersten Substrats gegenüberliegt,
wobei das Verfahren dadurch gekennzeichnet ist, daß
- man zwischen der Polarisationseinrichtung und dem ersten Substrat zumindest eine Schicht (52) eines thermoplastischen Polymeren aufbringt,
- man die zwei Seiten des so erhaltenen Verbunds einer gleichförmigen Pressung unterwirft,
- man diesen Verbund, der weiter in diesem Zustand der Pressung gehalten wird, erwärmt, bis jede Werkstoffschicht aus ihrer Glasphase in ihre isotrope Phase übergeht,
- man das Erwärmen beendet,
- man die Pressung einstellt und
- man eine Schicht nematischen Flüssigkristall zwischen die zwei Substrate füllt.

12. Verfahren nach Anspruch 11, dadurch gekennzeichnet, daß man zu dem Verbund, bevor man die gleichförmige Pressung anwendet, ein Substrat (50) hinzufügt, das mit mindestens einem gefärbten Filter versehen ist.
